# EUROPEAN PATENT SPECIFICATION

(11) **EP 4 145 004 B1**
(45) Date of publication and mention of the grant of the patent: **19.06.2024**
(21) Application number: 21195128.0
(22) Date of filing: 06.09.2021
(51) Int. Cl.: F16B 19/10

(54) **BLIND FASTENER WITH IMPROVED STEM AND METHOD OF SETTING THE SAME**
BLINDBEFESTIGUNGSELEMENT MIT VERBESSERTEM SCHAFT UND ZUGEHÖRIGES SETZVERFAHREN
FIXATION AVEUGLE À TIGE AMÉLIORÉE ET SON PROCÉDÉ DE POSE

(43) Date of publication of application: 08.03.2023
(73) Proprietor: Newfrey LLC, New Britain, CT 06053 (US)
(72) Inventor: Lutz, Oliver, 35394 Gießen (DE); Hofmann, Lukas, 35394 Gießen (DE)
(74) Representative: SBD IPAdmin

(56) References cited:
- WO-A1-98/23872
- DE-A1-102012 106 333
- FR-A- 1 331 622
- GB-A- 2 351 538

## Description

The present invention relates to a blind fastener for producing a permanent connection between or among workpieces defining a hole when the blind fastener is pulled by a tool to set the blind fastener by applying a predetermined tensile load thereto. The present invention is further directed to a method of setting the same.

A blind fastener is used for producing a permanent connection between or among workpieces, wherein only one side of the workpieces must be accessible for setting the rivet. Blind fasteners generally operate on the principle of radial expansion and/or axial compression of material and are set in an aperture in one or more workpieces from one side of the workpiece. For example, they may be used to permanently interconnect workpieces. The workpieces usually comprise through-holes that are aligned with one another and in which the blind fastener (for instance a blind rivet) is inserted and then fastened by means of deformation. A fastened blind fastener clamps the workpieces against one another. They can also be used as sealing plugs. The radial expansion of the plug blocks the hole thereby to prevent fluid flow past the sealed plug. There are generally two types of expansion actuation: pushing and pulling. In each case, a relatively harder material than that which expands within the hole is used to cause the relatively soft, expanding material to flow radially outwards within the hole (for the sealing plugs) or for forming a closing head on the blind side of a workpiece. There may also be an axial, compressive material flow which applies an elastic clamping compressive force to the workpieces to urge the fastener and workpiece(s) together.

In the automotive industry, blind fasteners are used inter alia to fasten attachment parts, such as power-window motors, loudspeakers and other parts, to a unit support, such as a door module support, by means of one or more blind fasteners.

A blind fastener usually comprises a body with a hollow shank and a body head, a stem with an elongated cylindrical shaft and a stem head. The shaft comprises a weakened portion and extends through the hollow shank. The stem head rests against an end of the hollow shank and a stem-tail protrudes from the other end of the hollow shank. During a rivet setting process, the body head is supported by a setting tool, and the shaft of the stem is subjected to tensile loading by the tool, and thereby pulled through the body until the stem head contacts the remote end face of the body. Further tensile loading of the shaft then causes the remote end face of the body to collapse causing material expansion for forming a closing head for example.

Several prior arts deal with improving the construction of blind fasteners, notably in order to provide a better fixation.

For instance, EP2176557A1 discloses an open end blind rivet with a body having a through bore and a body head. An elongated stem is arranged within the through bore. The elongated stem comprises a shaft and a laterally enlarged head. A breakneck and various depressions and adjacent protrusions are provided on the stem for holding the stem in the body. The breakneck is arranged between the head and the protrusions. EP0635647A1 discloses a stem with bulges located between shallow recesses formed beneath a stem head in order to allow the stem to be temporarily held in the rivet body.

In EP2176557A1 and EP0635647A1, the protrusions and depressions are arranged to provide an interference fit with the unplaced rivet body bore and so help hold the rivet assembly together when being handled or when boxed and in-transit. They secure the stem to the body during shipping and tool feeding.

The setting of the rivet ends with a defined break-off of the stem at a predetermined breaking point (corresponding to the weakened portion of the stem) and at a predetermined breaking force. The remaining stem then remains in the set blind fastener, and one disposes of the broken part of the stem. When breaking the stem at the predetermined breaking point, a force is applied on the remaining part of the stem, which makes it difficult to securely lock the remaining part of the stem into the body.

EP1369600A2 discloses peel-type blind rivet with a body and a shaft comprising two protrusions, and two diametrically opposed recesses in the form of flat planes cut into the outer surface of a cylindrical head-shaft portion. During setting process, the distal end of the body is splitted into segments or petals which peel back into contact with the blind side of the workpiece. On completion of the setting process, when the tensile loading is at its maximum, the stem breaks at a breakneck, but the ensuing release of energy is not able to eject the remaining part of the stem from the body since it is held in place by the deformed body material that has moved around the protrusions and into the recesses of the stem.

WO21089210 A1 discloses a blind fastener with a stem such that the outer diameter of the stem central portion tapers to a minimum central portion diameter at the point where the stem central portion meets the stem head. Thus, the stem is better retained within the body both during the setting operation and thereafter.

WO 98/23872 A shows a further blind fastener of the prior art.

While these constructions and geometries have improved the reliability of blind fasteners, further improvements are still desirable. It is notably an object of the present application to provide a blind fastener with a stem better secured to the body after the setting operation, in order to avoid any loose or weak connections which may notably generate noise. It is also an object of the present invention to provide a blind fastener with retention features, wherein the stem does not strike on the retention features during setting.

To this aim, according to the invention, it is provided a blind fastener according to claim 1. The depressions form a retention feature. The axially opposed depressions provided on the stem in the close vicinity of the head, directly under the head, allows a form fit between the stem and the body after the setting operation. An interlock is formed directly under the head and due to this interlock, the position of the remaining part of the stem, after the setting, is not arbitrary anymore. The stem remains secured within the body in the mounted position of the blind fastener. The geometry of the depressions allows a better material flow during setting and the remaining part of the stem is better secured to the body after setting. In other words, a better inter-engagement between the two parts (remaining stem and body) is created after deformation to avoid a loose connection.

In an embodiment, there is an inflection point between the intermediate portion and the second surface. Looking at the blind fastener from the outside, the intermediate surface is concave, whereas the second surface is convex. This improves the interlock and simplifies manufacturing.

In an embodiment, the first surface forms an angle with the first axis A-A between 25° and 65°, more preferably between 35° and 55° and even more preferably the shoulder angle of inclination is 45°. This aids with material flow during setting.

In an embodiment, the second radius of curvature is between 0.3 mm and 0.7 mm, more preferably the second radius of curvature is 0.5 mm. In an embodiment, the first radius of curvature is between 0.05 mm and 0.15 mm, more preferably is 0.1 mm. This improves the form fit between the body and the stem after setting.

In an embodiment, the weakened portion is a breakneck and the distance between the underside of the head and the beginning of the first surface is at most one tenth of the distance between the underside of the head and the middle of the breakneck. The part of the stem remaining in the body after setting can thus longer, providing a better retention. This again improves the form fit between the body and the stem after setting.

In an embodiment, the second end of the hollow shank is a closed end. In an embodiment, the blind fastener is a sleeve-shaped blind rivet or a sealing plug for blind installation and the second end of the hollow shank is a closed end. In an embodiment, the stem head is sensibly cylindrical and comprises an upperside which extends parallel to the underside. Closed-end blind rivet may for instance be used in the automotive industry on electric cars for the batteries.

In an alternative embodiment, the blind fastener is a cup-shaped blind rivet or a blind rivet stud and the shank is provided with a through hole.

In an embodiment, material bulges are provided between the weakened portion and the head. These bulges provide a force fit. Besides, these bulges, formed during the manufacture of the depressions avoid unnecessary weakening of the portion of the stem provided with the depression. Therefore, there is no risk that the stem breaks where the depressions are created. The stem breaks in the weakened portion forming a breakneck.

In an embodiment, two diametrically opposed material bulges extending from the underside of the head or in a close vicinity of the underside of the head are provided, wherein one material bulge extends between two depressions. This aids with securing the remaining part of the stem forming a force fit between the body and the stem after completion of the setting process and strengthen this portion of the stem and strengthen the stem at the depressions level.

The present invention is also directed to a method of setting a blind fastener according to claim 12. A form fit is created which ensures securing the remaining part of the stem to the body after setting.

In an embodiment, the blind fastener further comprises at least one material bulge provided between the weakened portion and the head, wherein during the relative movement between the stem and the sleeve being such that the material of the body cooperates with the material bulge to form a force-type connection between the stem and the body when the blind fastener is set into the hole. Both a form fit with the depression and a force fit with the material bulges are formed after setting.

Finally, the present disclosure is directed to a method for producing a blind fasteners previously described. In one step, the depressions and the material bulges are formed such that the stem is not weakened in the area of the depressions. Both a form fit with the depression and a force fit with the material bulges are formed after setting.

Other characteristics and advantages of the invention will readily appear from the following description of embodiments, provided as non-limitative examples, in reference to the accompanying drawings.

In the drawings:
Fig. 1 shows an axial section through a portion of the stem and the body of a blind fastener comprising a closed end body according to a first embodiment of the present invention.
Fig. 2A shows an axial section through the stem of Fig. 1.
Fig. 2B shows a perspective view of a portion of the stem of Fig. 1 with a material bulge and a depression.
Fig. 3 shows detail III of Fig. 2.
Fig. 4 shows a cross section of a die for making the stem of Fig. 2.
Fig. 5 shows a detailed view of detail V of Fig. 4.
Fig. 6A shows an axial section through a portion of the stem and the body of a blind fastener comprising an open end body according to a second embodiment of the present invention, the stem comprising depressions.
Fig. 6B shows an axial section through a portion of the stem and the body of the blind fastener of Fig. 6B through a different cutting plan where material bulges are schematically represented.
Fig. 7 shows an axial section through the stem of Fig. 6A.
Fig. 8 shows detail VIII of Fig. 7.
Fig. 9A shows a cross section of a die according to a first variant for producing a stem according to the second embodiment of the present invention, wherein the portion destined to make the depression is curved.
Fig. 9B shows a cross section of a die according to a second variant for producing a stem according to a second embodiment of the present invention, wherein the portion destined to make the depression is straight.
Fig. 9C shows a perspective detailed view of the die of Fig. 9A with the curved portion.
Fig. 9D shows a perspective detailed view of the die of Fig. 9B with the straight portion.
Fig. 10A shows detail X-A of Fig. 9A.
Fig. 10B shows a detailed view of detail X-B of Fig. 9B.
Fig. 11A is a first schematic cross section view of the blind fastener of Fig. 1 being set in a hole of a workpiece, wherein depressions on the stem are visible;
Fig. 11B is a second schematic cross section view of the blind fastener of Fig. 1 being set in a hole of a workpiece, wherein material bulge on the stem are schematically depicted.
Fig. 12 shows a schematic cross section view of a blind fastener according to the prior art, without the depressions and/or material bulges.
Fig. 13A is a first schematic cross section view of the blind fastener of Fig. 6A being set in a hole of a workpiece, wherein depressions on the stem are visible.
Fig. 13B is a second schematic cross section view of the blind fastener of Fig. 6A being set in a hole of a workpiece, wherein material bulges on the stem are visible.

On the different figures, the same reference signs designate identical or similar elements.

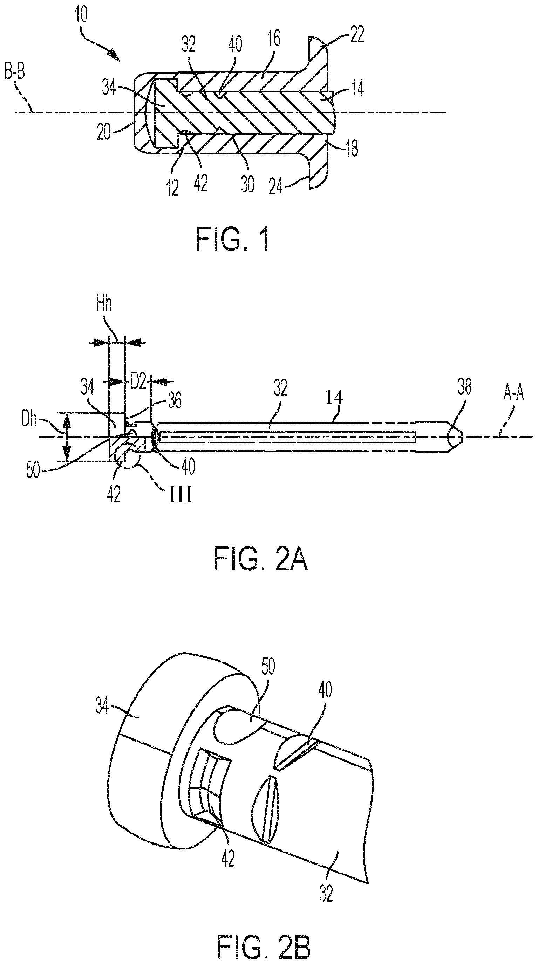

Fig. 1 to 3 show a first embodiment of a blind fastener 10 according to the present invention. The blind fastener 10 is in a non-mounted state. The blind fastener 10 comprises a body 12 and a stem 14. The blind fastener 10 of Fig. 1 is for instance a closed-end blind fastener. The blind fastener 10 may actually be a closed-end blind rivet, a closed-end blind rivet stud or a sealing plug.

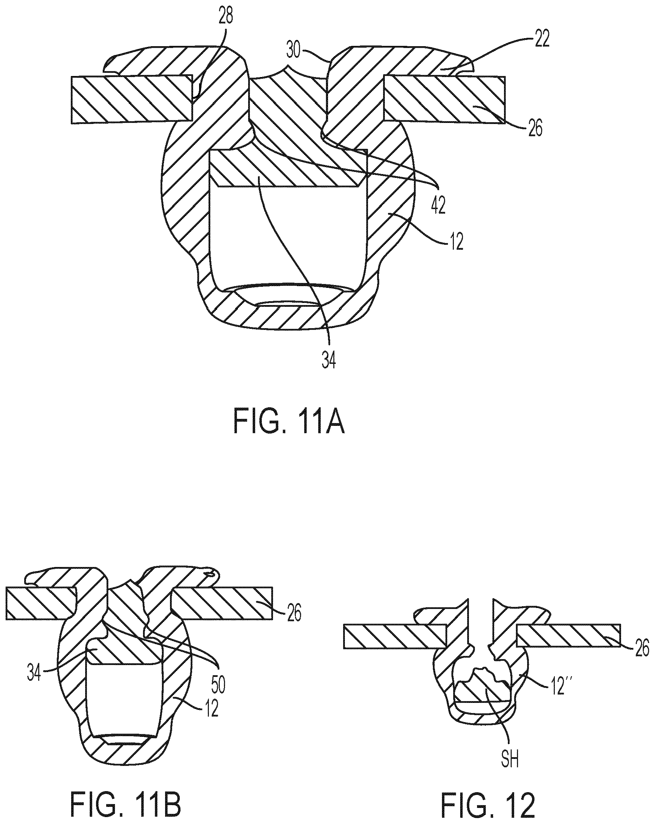

The body 12 is provided with a hollow shank 16 comprising a first end 18 and a second end 20. The body 12 longitudinally extends along a second axis B-B. The hollow shank 16 has a given outer diameter. A radial enlargement portion forming a body head 22 extends at the first end 18 of the shank 16. The body head 22 includes a contact face 24 for abutment against a surface of a workpiece 26 (shown notably in Fig. 11A). The body head 22 merges into the shank 16 which can be inserted into a workpiece bore 28 (see Fig. 11A). As visible in Fig. 1, the body 12 comprises a blind hole 30 accessible from the first end 18. The second end 20 is a closed end.

The stem 14 (as better seen in Fig. 2A) is provided with an elongated shaft 32 extending along a first axis A-A and a radially enlarged stem head 34. The stem head 34 comprises an underside 36 facing the shaft 32. The underside 36 is for instance sensibly orthogonal to the first axis A-A. The stem head 34 is for instance cylindrical with its underside extending sensibly parallel to the top of the stem head. The stem head 34 has a height Hh and a diameter Dh. However, in other embodiments (not represented), the stem head may have another shape. For instance, the stem head may be a round head or a domed head.

The shaft 32 comprises a stem-tail 38 opposite the stem head 34. A weakened portion 40 (as seen notably in Fig. 2A and Fig. 2B) is provided on the stem. The weakened portion forms a breakneck 40. The breakneck 40 is a predetermined breaking point that is intended to break during setting of the blind fastener 10. The stem head 34 and the shaft 32 have circular cross- sections, with the shaft 32 having a substantially uniform diameter, and the diameter of the stem head 34 being greater than the diameter of the shaft 32. The breakneck 40 can likewise have a circular cross-section, but its cross-section can also deviate from the circular shape. For instance, the breakneck can have a square cross-section as represented in Fig. 2B. The cross-sectional area of the breakneck 40 is smaller than the cross-sectional area of the shaft, and its size and the strength of the material determine the breaking strength at which the breakneck 40 breaks under the stress of tensile force.

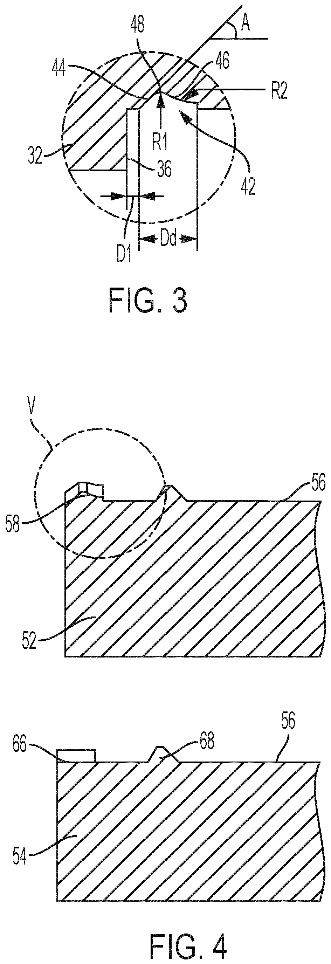

The shaft 32 comprises two depressions 42 (or recesses) provided between the weakened portion (or breakneck) 40 and the stem head 34, as shown in Fig. 2A. Fig. 2B and Fig. 3 both show only one depression 42, the second diametrically opposed depression 42 being hidden. The depressions 42 are adapted to form an interlock with the body 12 in a set position of the blind fastener 10. The depressions 42 are spaced apart from each other. For instance, the depressions 42 are diametrically opposed.

Each depression 42, in a cross-section, has sensibly a V-shape with an inclined first surface 44 and a second surface 46, as better seen in Fig. 3. The first surface 44 is flat, whereas the second surface 46 is curved and has a second radius of curvature R2. The first and second surface 44, 46 are connected by an intermediate surface 48 having a first radius of curvature R1. The first radius of curvature R1 is different than the second radius of curvature R2. For instance, the first radius of curvature R1 is between 0.05 mm and 0.15 mm, more preferably is 0.1 mm. The second radius of curvature R2 may be between 0.3 mm and 0.7 mm, more preferably the first radius of curvature R1 is 0.5 mm. The intermediate surface 48 is concave whereas the second surface is convex (when looking at the blind fastener from the outside), thus an inflexion point is provided between the intermediate and the second surface. The first surface 44 forms an angle A with the first axis A-A between 25° and 65°, more preferably between 35° and 55° and even more preferably the angle of inclination is 45°. The depressions extend axially over a distance Dd. The distance Dd is greater than the distance D1 between the underside 36 of the stem head 34 and the beginning of the first surface 44.

Material bulges 50 may be provided between the weakened portion and the stem head 34, as better seen in Fig. 2B. More particularly, two diametrically opposed material bulges 50 are provided. Each material bulge 50 is located between depressions. More particularly, the material bulges extend at 90 degrees from the depressions 42. As mentioned above the depressions 42 extend from the underside 36 of the stem head 34 or in a close vicinity of the underside 36 of the stem head 34. It is to be understood that "in a close vicinity of the underside of the head" means at a reduced distance from the underside of the stem head 34. More particularly, the distance D1 between the underside 36 of the stem head 34 and the beginning of the first surface 44 is at most one tenth (1/10) of the distance D2 between the underside of the stem head 34 and the middle of the breakneck. Even more particularly, the distance between the underside of the head and the beginning of the first surface 44 is less than one fifteenth (1/15) of the distance between the underside of the head and the middle of the breakneck. As schematically depicted in Fig. 2B the material bulges 50 each have a sensibly hemispherical shape. The material bulges 50 are in axial alignment with surfaces that have the depressions 42. The material bulges 50 which are the result of the manufacturing repression by manufacturing the depressions 42.

The blind fastener 10 is formed from the union of the body 12 and the stem 14. The stem 14 partly extends in the blind hole 30 of the body 12. The stem 14 is coaxial with the body 12 (first axis A-A and second axis B-B are coaxial). The stem head 34 is embedded in the hollow shank 16. More particularly, the body 12 surrounds the stem head 34 and a portion of the shaft 14. The stem tail 38 projects from the first end 18 of the shank 16 and from the body head 22. The hollow inner surface of the shank 16 is formed closely onto the outer surface of the stem head 34 and shaft 32. The body 12 has no particular space to accommodate and the internal surface surrounding the blind hole is sensibly cylindrical in a non-mounted state of the blind fastener 10.

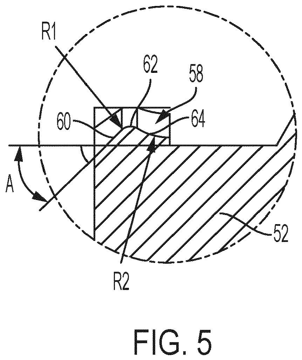

Fig. 4 shows a cross-section of part of half-dies 52, 54 used to manufacture the stem 14. Such dies 52, 54 are for instance included in a nailery machine (not shown) to manufacture the stem 14. The nailery machine in a known manner also includes a pressing punch and a guide. Semi-cylindrical grooves 56 facing one another are respectively formed in the half dies 52, 54 so as to grip a portion of a raw rod from which the stem 14 is formed. The first die 52 comprises a projection 58 having in a cross-section a first inclined segment 60, an intermediate segment 62 and a second segment 64, as more detailed in Fig. 5. The second segment 64 and the intermediate segment 62 are curved with different radii of curvature. The first segment 60 is sensibly flat. The projection 58 is destined to form the depression 42 in the stem, and therefore the curvatures of the second and intermediate segment corresponds to the curvature of the second and intermediate surfaces 46, 48. The first inclined segment 60 imprints the first surface 44, the second segment 64' imprints the second surface 46 and the intermediate segment 62 imprints the intermediate surface 48. The projection 58 is curved, as seen in Fig. 4 and Fig. 5, such as to form curved depressions 42 as depicted in Fig. 2B. However, in another embodiment, the projection 58 may be straight or flat (as described below in reference to the second embodiment).The second die 54 is provided with a gentle recess 66 to form the bulges 50 (or more particularly to receive the material from the depression). The shape of the recess 66 corresponds to the counter-shape of the material bulges. The first and second dies 52, 54 also comprise a sharp ridge 68 to form the breakneck 40 in the stem. The raw rod is held immovably in place prior to the formation of the stem head. In a single step, breakneck, depressions and material bulges will be forged on the shaft. The dies 52, 54 also comprises a portion for forming the stem head (not depicted in Fig. 4).

To produce the body 12, a starting piece is cut from a fed wire and is formed into a circular disk-shaped pellet. The pellet is then formed by means of pressing tools into a cup-shaped blank. The stem 14 produced notably with the dies of Fig. 4 is inserted with the stem head foremost, into an opening of the blank. The blank is then extruded in an impact extrusion die to form the body 12 that closely surrounds the stem head 34, the breakneck 40 and a portion of the shaft 32. A flange (the body head 22) is formed onto the open head of the body 12.

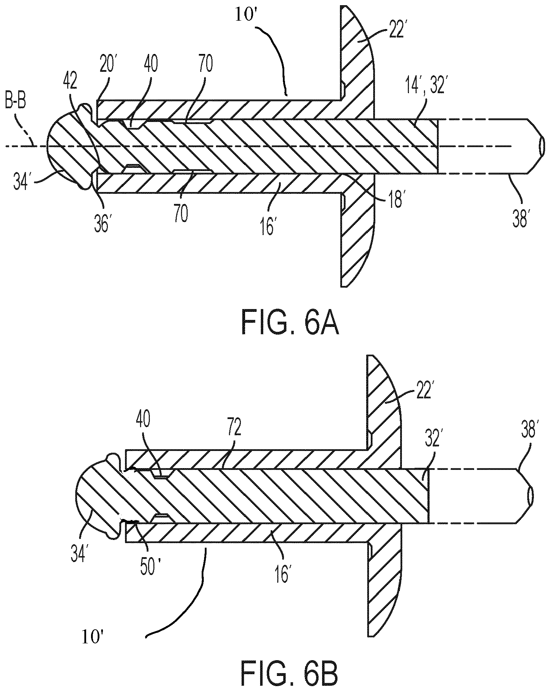

Fig. 6A to Fig. 8 show a second embodiment of a blind fastener 10' according to the invention. The blind fastener 10' comprises a body 12' and a stem 14'. The blind fastener 10' of Fig. 6A and Fig. 6B is for instance an opened-end blind rivet. The body 12' is provided with a hollow shank 16' comprising a first end and a second end 18', 20'. The hollow shank 18' had a given outer diameter Ds'. A radial enlargement portion forming a body head 22' extends at the first end 18' of the shank 16'. The body head 22' includes a contact face 24' for abutment against a surface of a workpiece. The body 12' comprises a through hole 30'.

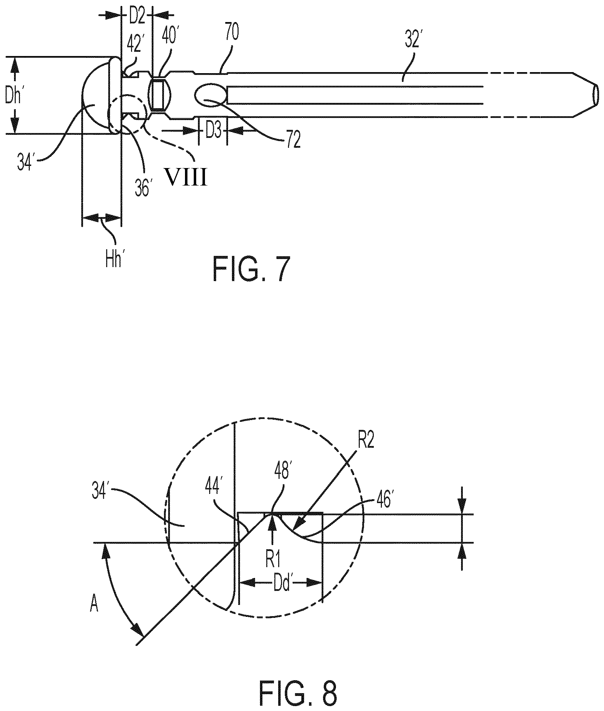

The stem 14' is similar to the stem 14 described with regard to Fig. 1 to Fig. 3, apart from the stem head 34'. As depicted in Fig. 8, the depressions 42' and the geometry of the depressions 42' are similar to those already described with regard to Fig. 1 to Fig. 3. The depressions 42' extend axially over a distance Dd'. The stem head 34' is adapted for abutting against the second end of the body 12'. More particularly, the stem head 34' comprises an underside 36' facing the shaft 32'. The underside contacts the second end 20' of the body 12'. The underside 36' may extend sensibly orthogonal to the first axis A-A. The top of the stem head 34' is for instance curved, but in other embodiment, it may be flat or have other shapes. The stem head has for example a height Hh' and an outer diameter Dh'. The inclined flat first surface 44' of the depressions 42' extends directly from the underside of the head, as visible in Fig. 6A, Fig. 7 and Fig. 8. Fig. 6B shows a cross-section of the blind fastener in another cutting plan than Fig. 6A, and more particularly in a cutting plan extending orthogonal to the cutting plane of Fig. 6A. The depressions 42' are not visible anymore, but one can see the material bulges 50' schematically represented. The shaft 32' can be provided with recesses 70 and protrusions 72 arranged between the breakneck and the stem tail, at a closer distance to the breakneck than to the stem tail, as shown in Fig. 7. The recesses and protrusions 70, 72 are adapted to retain the stem within the body when handling or shipping the blind fastener prior to the setting. The recesses 70 have for example a frustum shape extending axially over a distance D3. The distance D3 is greater than the distance Dd' (see for instance Fig. 8). For instance, two diametrically opposed recesses 70 and two diametrically opposed protrusions 72 are provided.

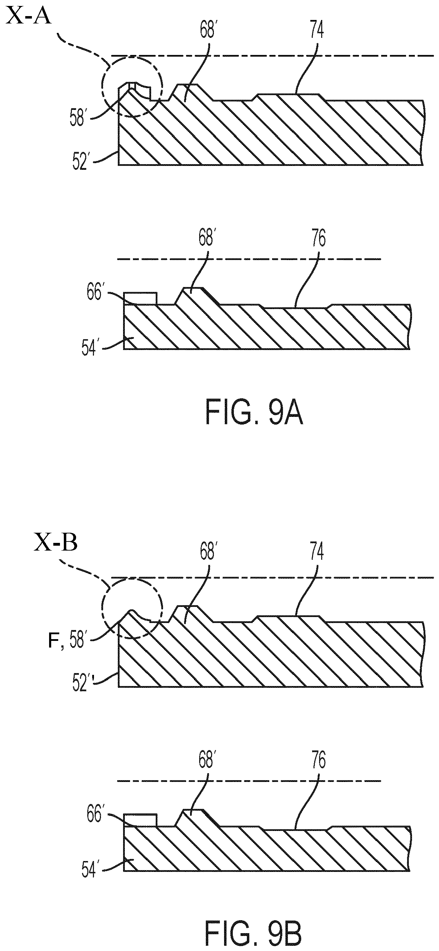

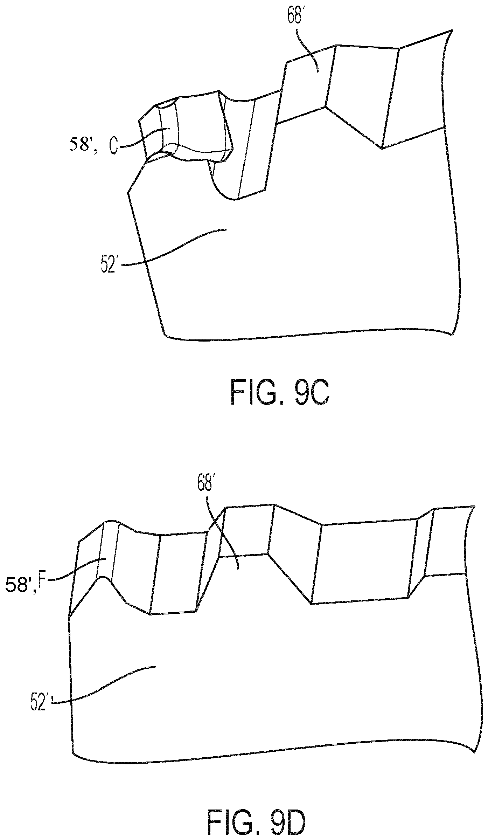

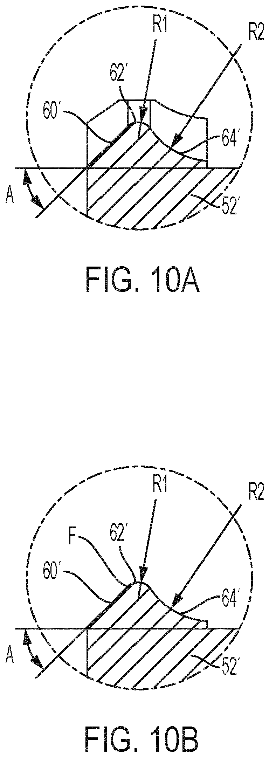

Fig. 9A shows a cross-section of part of half-dies 52', 54' used to manufacture the stem of Fig. 7 according to a first variant. Such dies 52', 54' are included in a nailery machine to manufacture the stem 14'. The nailery machine in a known manner also includes a pressing punch and a guide. The pressing punch and guide will not be further described here, as those skilled in the art understand and appreciate how nailery machines operate. Semi-cylindrical grooves 56' facing one another are respectively formed in the half dies 52', 54' so as to grip a portion of a raw rod from which the stem is formed. The first die comprises a first die projection 58' having a cross-section with a first inclined segment 60', an intermediate segment 62' and a second segment 64', as more detailed in Fig. 10A. The second segment 64' and the intermediate segment 62' are curved with different radii of curvature. The first segment 60' is sensibly flat. The first die projection 58' is destined to form the depression 42'in the stem. The first inclined segment 60' imprints the first surface 44', the second segment 64' imprints the second surface 46' and the intermediate segment 62' imprints the intermediate surface 48'. The radii of curvature R1 and R2 of the die correspond to the radii of curvature of the stem disclosed above. A second die projection 74 may also be provided to form the protrusions 70 in the stem. The second die projection 74 has the shape of a ramp. The second die 54' is provided with a first gentle recess 66'to form the bulges 50' (or more particularly to receive the material from the depression), and a second gentle recess 76 to receive the material flowing away from the projection to form the protrusions. The first and second dies 52', 54' also comprise a sharp ridge 68' to form the breakneck in the stem. The sharp ridge 68' extends between the first and the second die projections 58', 74 (for the first die) and between the first and the second recesses 66, 76 (for the second die). The projection 58' of Fig. 9A and Fig. 10A is curved. More particularly, Fig. 9C shows the die 52' with the projection 58'. The projection 58' is a curved projection C which imprints a curved depression 42'.

In a second variant, as shown in Fig. 9B, Fig. 10B and Fig. 9D, the die 52" are similar to the die 52', apart from the projection 58'. Whereas the projection 58' is a curved projection 58', C in the first variant (corresponding to the die of Fig. 9A, Fig. 9C and Fig. 10A), the projection 58' in the second variant is a straight projection 58', F. In other words, the projection 58', F is flat and imprints a flat depression 42' on the stem. The die 52" is thus less prone to breakage and more durable. The depression 42' forms thus a cut in the stem, similar to the cut formed by the breakneck 40'. However, the cross-section of the depression 42' (and thus of the projection 58', F) remains the same with the first inclined segment 60', the second segment 64' and the intermediate segment 62', as previously described.

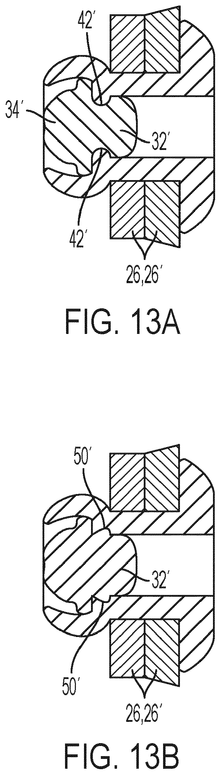

The blind fastener 10, 10' can be set in a blind hole or in a through hole 28 of a workpiece 26, as depicted in Fig. 11A, Fig. 11B (for the blind rivet 10 according to the first embodiment) and in Fig. 13A and Fig. 13B (for the blind rivet according to the second embodiment). A setting tool (not represented) with a nose is used to set the blind fastener 10, 10' into the hole of a workpiece 26. The setting tool will not be further described here, as those skilled in the art understand and appreciate how such tools operate in order to set blind fasteners. The shank 16 is inserted into the hole 26 and the contact face 24 of the body head 22 contacts the workpiece at the periphery of the hole 26.

The nose grips and then apply an axial force to the stem tail 38, 38' and a portion of the shaft 32, 32', whilst holding the body head 22, 22' against an axial movement, so that movement of the stem head relative to and towards the body 12, 12' occurs. Once the force applied by the setting tool to the stem 14, 14' is sufficient to cause relative movement between the stem and the body, then because a front member of the nose abuts and is held positively against the workpiece, relative movement between the setting tool and workpiece is prevented. The only movement permitted, therefore, is that of the stem 14, 14' within the body 12, 12'. The body 12 being for instance in a material softer than the stem, it folds under the force of the stem head 34, 34'. The body collapses causing material expansion for forming a closing head for example. During setting, material from the body is urged into the depressions 42, 42' (and eventually around the bulges 50, 50'). The first surface 44, 44'of the depression, due to its flat inclined shape, allows the material to easily and continuously flows into the depression 42, 42'. The second surface 46, 46', with its curved shape allows retention of the material. An interlock or a form fit is thus created. On completion of the setting process, when the axial force is at its maximum, the stem breaks at the weakened portion.

Fig. 11A schematically shows the blind fastener 10 of Fig. 1 in a setting state within a hole of a workpiece 26. The portion of the stem 14 remaining in the folded body 12 is securely held through the retaining features 42, 50, and more particularly through the interlock created by the particular geometry of the two diametrically opposed depression 42. Fig. 11A shows more particularly the interference between the depressions 42 and the body 12 in the mounted state of the blind fastener 10. The depressions create a form fit locking with the body 12 as previously described. Fig. 11B shows in an exaggerated manner the material fit and the additional force-fit created by the material bulges 50. The locking created by the depressions 42 remains the main locking feature and the effect of the friction locking created by the material bulges 50 is far less important than the locking created by the depressions 42.

Fig. 12 shows a blind fastener of the prior art without depressions 42. As can be seen, when mounted on the workpiece, the remaining stem is loosened within the body 12 which generates noise. The depression 42 (and to a lesser extend) the material bulges 50 avoids such drawback and ensure a strong locking of the remaining stem.

More particularly, blind fasteners 10 with the above-described retention features (and notably with the above-disclosed depression 42 and its particular shape) show a retention force of the stem within the body after setting between 70 Newtons and 190 Newtons, whereas blind fasteners without such retention feature show either no retention force (thus resulting in the remaining stem falling within the body 12, as shown in Fig. 12) or very weak retention force in the range of 10 to 30 Newtons. Such retentions forces are determined using the norm DIN 14589 for blind rivets and well-known from those skilled in the art.

Fig. 13A and Fig. 13B finally schematically show blind fasteners 10' according to the second embodiment when mounted to a workpiece 26, and more particularly when joining two workpieces 26, 26' together. As seen in Fig. 13, the two depressions 42' are entirely filled with body material after setting, thus providing a reliable retention of the remaining stem within the body after setting. Fig. 13B shows in an exaggerated manner the interlock between the material bulges and the body 12 after setting.

## Claims

1. Blind fastener (10, 10') for producing a permanent connection between or among workpieces defining a hole when the blind fastener is pulled by a tool to set the fastener by applying a predetermined tensile load thereto, the blind fastener comprising:
- a body (12, 12') with a hollow shank (16, 16') comprising a first end (18, 18') and a second end (20, 20') and having a given outer diameter (Ds, Ds'), and a radial enlargement portion forming a body head (22, 22') at the first end (18, 18') of the shank (16, 16'),
- a stem (14, 14') with an elongated cylindrical shaft (32, 32') extending along a first axis A-A and a radially enlarged stem head (34, 34'), wherein the shaft (32, 32') partly extends through the hollow shank (16, 16'), comprises a stem-tail (38, 38') which projects from the first end of the shank (16, 16') and a weakened portion, wherein the stem head (34, 34') comprises an underside (36, 36') facing the shaft (32, 32'),
wherein the shaft comprises two diametrically opposed depressions (42, 42') provided between the weakened portion and the stem head (34, 34'),
**characterized in that** the depressions (42, 42') extend from the underside of the stem head or in a close vicinity of the underside of the stem head (34, 34'), and is adapted to form an interlock with the body (12, 12') in a mounted position of the blind fastener (10, 10'), wherein the depressions (42, 42'), in a cross-section, have a V-shape with a inclined flat first surface (44, 44'), a second surface (46, 46') comprising a second radius of curvature (R2), the first and second surfaces being connected by an intermediate portion (48, 48') having a first radius of curvature (R1), different from the second radius of curvature (R2).

2. Blind fastener (10, 10') according to claim 1, wherein there is an inflection point between the intermediate portion (48, 48') and the second surface (46, 46').

3. Blind fastener (10, 10') according to claim 1 or 2, wherein the first surface (44, 44') forms an angle A with the first axis A-A between 25° and 65°, more preferably between 35° and 55° and even more preferably the shoulder angle of inclination is 45°.

4. Blind fastener (10, 10') according to any of claims 1 to 3, wherein the second radius of curvature (R2) is between 0.3 mm and 0.7 mm, more preferably the second radius of curvature (R2) is 0.5 mm.

5. Blind fastener (10, 10') according to any of claims 1 to 4, wherein the first radius of curvature (R1) is between 0.05 mm and 0.15 mm, more preferably is 0.1 mm.

6. Blind fastener (10, 10') according to any of claims 1 to 5, wherein the weakened portion is a breakneck (40, 40') and the distance (D1) between the underside of the head and the beginning of the first surface is at most one tenth of the distance between the underside of the head and the middle of the breakneck.

7. Blind fastener (10) according to any of claims 1 to 6, wherein the second end (20) of the hollow shank is a closed end, wherein the blind fastener (10) is a closed-end blind rivet.

8. Blind fastener (10') according to any of claims 1 to 6, wherein the body comprises a through hole extending from the second end (20') to the body head, and wherein the blind fastener (10') is an open-end blind rivet.

9. Blind fastener (10') according to claim 8, wherein the shaft (32') comprises recesses and protrusions (70, 72) adapted to retain the stem within the body before setting, wherein the recesses and protrusions are provided between the weakened portion and the stem tail.

10. Blind fastener (10, 10') according to any of claims 1 to
9, wherein material bulges (50, 50') are provided between the weakened portion and the head.

11. Blind fastener (10, 10') according to any of claims 1 to 10, wherein two diametrically opposed material bulges (50, 50') extending from the underside of the head or in a close vicinity of the underside of the head are provided, wherein one material bulge extends between two depressions (42, 42').

12. Method of setting a blind fastener (10, 10') according to any of claims 1 to 11 comprising the steps of:
- providing a workpiece (26) with a hole,
- inserting the blind fastener (10, 10') into the hole with the body head (22, 22') resting against the workpiece and the stem tail projecting from the hole,
- providing a setting tool with a nose and passing the nose over the stem-tail (38, 38') and abutting the nose against the body head (22, 22');
- moving the stem-tail towards the setting tool thereby causing relative axial movement between the stem (14, 14') and the body (12, 12'), such that the stem head moves axially into engagement with the body, the material of the body deforms initially radially outwardly, under axial compression;
the method **characterised by** the relative movement between the stem and the sleeve being such that the material of the body cooperates with the depressions (42, 42') in order to form an interference fit or form fit between the stem and the body when the blind fastener (10, 10') is set into the hole.

13. Method according to claim 12, wherein the blind fastener (10, 10') further comprises two material bulges (50, 50') provided between the weakened portion and the stem head (34, 34'), wherein during the relative movement between the stem and the body (12, 12') being such that the material of the body cooperates with the material bulge to form a force-type connection between the stem and the body when the blind fastener (10, 10') is set into the hole.

## Patentansprüche

1. Blindbefestigung (10, 10') zum Herstellen einer dauerhaften Verbindung zwischen oder unter Werkstücken, die ein Loch definieren, wenn die Blindbefestigung durch ein Werkzeug gezogen wird, um die Befestigung durch Aufbringen einer vorbestimmten Zuglast darauf zu setzen, wobei die Blindbefestigung Folgendes umfasst:
- einen Körper (12, 12') mit einem Hohlschaft (16, 16'), der ein erstes Ende (18, 18') und ein zweites Ende (20, 20') umfasst und einen gegebenen Außendurchmesser (Ds, Ds') und einen radialen Erweiterungsabschnitt aufweist, der einen Körperkopf (22, 22') an dem ersten Ende (18, 18') des Schaftes (16, 16') bildet,
- eine Spindel (14, 14') mit einer länglichen zylindrischen Welle (32, 32'), die sich entlang einer ersten Achse A-A und einem radial vergrößerten Spindelkopf (34, 34') erstreckt, wobei sich die Welle (32, 32') teilweise durch den Hohlschaft (16, 16') erstreckt, ein Spindelende (38, 38'), das vom ersten Ende des Schaftes (16, 16') vorsteht, und einen geschwächten Abschnitt umfasst, wobei der Spindelkopf (34, 34') eine der Welle (32, 32') zugewandte Unterseite (36, 36') umfasst,
wobei die Welle zwei diametral gegenüberliegende Vertiefungen (42, 42') umfasst, die zwischen dem geschwächten Abschnitt und dem Spindelkopf (34, 34') bereitgestellt sind,
**dadurch gekennzeichnet, dass** sich die Vertiefungen (42, 42') von der Unterseite des Spindelkopfes oder in einer unmittelbaren Nähe der Unterseite des Spindelkopfes (34, 34') erstrecken und dazu angepasst sind, in einer montierten Position der Blindbefestigung (10, 10') eine Verriegelung mit dem Körper (12, 12') zu bilden, wobei die Vertiefungen (42, 42') in einem Querschnitt eine V-Form mit einer geneigten flachen ersten Fläche (44, 44'), und einer zweiten Fläche (46, 46'), die einen zweiten Krümmungsradius (R2) umfasst, aufweisen, wobei die erste und die zweite Fläche durch einen Zwischenabschnitt (48, 48') verbunden sind, der einen ersten Krümmungsradius (R1) aufweist, der sich von dem zweiten Krümmungsradius (R2) unterscheidet.

2. Blindbefestigung (10, 10') nach Anspruch 1, wobei zwischen dem Zwischenabschnitt (48, 48') und der zweiten Oberfläche (46, 46') ein Wendepunkt vorhanden ist.

3. Blindbefestigung (10, 10') nach Anspruch 1 oder 2, wobei die erste Fläche (44, 44') mit der ersten Achse A-A einen Winkel A zwischen 25° und 65°, bevorzugter zwischen 35° und 55° bildet, und noch bevorzugter beträgt der Schulterneigungswinkel 45°.

4. Blindbefestigung (10, 10') nach einem der Ansprüche 1 bis 3, wobei der zweite Krümmungsradius (R2) zwischen 0,3 mm und 0,7 mm beträgt, bevorzugter beträgt der zweite Krümmungsradius (R2) 0,5 mm.

5. Blindbefestigung (10, 10') nach einem der Ansprüche 1 bis 4, wobei der erste Krümmungsradius (R1) zwischen 0,05 mm und 0,15 mm beträgt, bevorzugter 0,1 mm beträgt.

6. Blindbefestigung (10, 10') nach einem der Ansprüche 1 bis 5, wobei der geschwächte Abschnitt eine Bruchstelle (40, 40') ist und der Abstand (D1) zwischen der Unterseite des Kopfes und dem Anfang der ersten Oberfläche höchstens ein Zehntel des Abstandes zwischen der Unterseite des Kopfes und der Mitte der Bruchstelle beträgt.

7. Blindbefestigung (10) nach einem der Ansprüche 1 bis 6, wobei das zweite Ende (20) des Hohlschafts ein geschlossenes Ende ist, wobei die Blindbefestigung (10) ein Blindniet mit geschlossenem Ende ist.

8. Blindbefestigung (10') nach einem der Ansprüche 1 bis 6, wobei der Körper ein Durchgangsloch umfasst, das sich von dem zweiten Ende (20') zum Körperkopf erstreckt, und wobei die Blindbefestigung (10') ein Blindniet mit offenem Ende ist.

9. Blindbefestigung (10') nach Anspruch 8, wobei die Welle (32') Aussparungen und Vorsprünge (70, 72) umfasst, die dazu angepasst sind, die Spindel vor dem Setzen innerhalb des Körpers zu halten, wobei die Aussparungen und Vorsprünge zwischen dem geschwächten Abschnitt und dem Spindelende bereitgestellt sind.

10. Blindbefestigung (10, 10') nach einem der Ansprüche 1 bis 9, wobei zwischen dem geschwächten Abschnitt und dem Kopf Materialwulste (50, 50') bereitgestellt sind.

11. Blindbefestigung (10, 10') nach einem der Ansprüche 1 bis 10, wobei zwei diametral gegenüberliegende Materialwulste (50, 50') bereitgestellt sind, die sich von der Unterseite des Kopfes oder in einer unmittelbaren Nähe der Unterseite des Kopfes erstrecken, wobei sich ein Materialwulst zwischen zwei Vertiefungen (42, 42') erstreckt.

12. Verfahren zum Setzen einer Blindbefestigung (10, 10') nach einem der Ansprüche 1 bis 11, umfassend die Schritte zum:
- Bereitstellen eines Werkstücks (26) mit einem Loch,
- Einsetzen der Blindbefestigung (10, 10') in das Loch, wobei der Körperkopf (22, 22') am Werkstück anliegt und das Spindelende aus dem Loch hervorsteht,
- Bereitstellen eines Setzwerkzeugs mit einer Nase und Führen der Nase über das Spindelende (38, 38') und Anlegen der Nase an den Körperkopf (22, 22');
- Bewegen des Spindelendes in Richtung des Setzwerkzeugs, wodurch relative axiale Bewegung zwischen der Spindel (14, 14') und dem Körper (12, 12') bewirkt wird, so dass sich der Spindelkopf axial in Eingriff mit dem Körper bewegt, wobei sich das Material des Körpers unter axialem Druck zunächst radial nach außen verformt;
wobei das Verfahren **dadurch gekennzeichnet ist, dass** die relative Bewegung zwischen der Spindel und der Manschette derart ist, dass das Material des Körpers mit den Vertiefungen (42, 42') zusammenwirkt, um eine Presspassung oder Formschluss zwischen der Spindel und dem Körper zu bilden, wenn die Blindbefestigung (10, 10') in das Loch gesetzt wird.

13. Verfahren nach Anspruch 12, wobei die Blindbefestigung (10, 10') weiter zwei Materialwulste (50, 50') umfasst, die zwischen dem geschwächten Abschnitt und dem Spindelkopf (34, 34') bereitgestellt sind, wobei während der relativen Bewegung zwischen der Spindel und dem Körper (12, 12') das Material des Körpers mit dem Materialwulst zusammenwirkt, um eine kraftschlüssige Verbindung zwischen der Spindel und dem Körper zu bilden, wenn die Blindbefestigung (10, 10') in das Loch gesetzt wird.

## Revendications

1. Fixation aveugle (10, 10') pour produire une connexion permanente entre ou parmi des pièces définissant un trou lorsque la fixation aveugle est tirée par un outil pour mettre en place la fixation en appliquant une charge de traction prédéterminée sur celle-ci, la fixation aveugle comprenant :
- un corps (12, 12') avec un fût creux (16, 16') comprenant une première extrémité (18, 18') et une seconde extrémité (20, 20') et présentant un diamètre extérieur (Ds, Ds') donné, et une partie d'élargissement radial formant une tête de corps (22, 22') au niveau de la première extrémité (18, 18') du fût (16, 16'),
- une tige (14, 14') avec un arbre cylindrique allongé (32, 32') s'étendant le long d'un premier axe AA et une tête de tige radialement élargie (34, 34'), dans laquelle l'arbre (32, 32') s'étend en partie à travers le fût creux (16, 16'), comprend une queue de tige (38, 38') qui fait saillie depuis la première extrémité du fût (16, 16') et une partie affaiblie, dans laquelle la tête de tige (34, 34') comprend une face inférieure (36, 36') tournée vers l'arbre (32, 32'),
dans laquelle l'arbre comprend deux dépressions diamétralement opposées (42, 42') prévues entre la partie affaiblie et la tête de tige (34, 34'),
**caractérisée en ce que** les dépressions (42, 42') s'étendent depuis la face inférieure de la tête de tige ou à proximité immédiate de la face inférieure de la tête de tige (34, 34'), et sont adaptées pour former un verrouillage avec le corps (12, 12') dans une position montée de la fixation aveugle (10, 10'), dans laquelle les dépressions (42, 42'), dans une section transversale, présentent une forme de V avec une première surface plate inclinée (44, 44'), une seconde surface (46, 46') comprenant un second rayon de courbure (R2), les première et seconde surfaces étant reliées par une partie intermédiaire (48, 48') présentant un premier rayon de courbure (R1), différent du second rayon de courbure (R2).

2. Fixation aveugle (10, 10') selon la revendication 1, dans laquelle il existe un point d'inflexion entre la partie intermédiaire (48, 48') et la seconde surface (46, 46').

3. Fixation aveugle (10, 10') selon la revendication 1 ou 2, dans laquelle la première surface (44, 44') forme un angle A avec le premier axe A-A compris entre 25° et 65°, plus préférentiellement entre 35° et 55° et encore plus préférentiellement, l'angle d'inclinaison d'épaulement est de 45°.

4. Fixation aveugle (10, 10') selon l'une quelconque des revendications 1 à 3, dans laquelle le second rayon de courbure (R2) est compris entre 0,3 mm et 0,7 mm, plus préférentiellement, le second rayon de courbure (R2) est de 0,5 mm.

5. Fixation aveugle (10, 10') selon l'une quelconque des revendications 1 à 4, dans laquelle le premier rayon de courbure (R1) est compris entre 0,05 mm et 0,15 mm, plus préférentiellement est de 0,1 mm.

6. Fixation aveugle (10, 10') selon l'une quelconque des revendications 1 à 5, dans laquelle la partie affaiblie est une cassure (40, 40') et la distance (D1) entre la face inférieure de la tête et le début de la première surface est au plus un dixième de la distance entre la face inférieure de la tête et le milieu de la cassure.

7. Fixation aveugle (10) selon l'une quelconque des revendications 1 à 6, dans laquelle la seconde extrémité (20) du fût creux est une extrémité fermée, dans laquelle la fixation aveugle (10) est un rivet aveugle à extrémité fermée.

8. Fixation aveugle (10') selon l'une quelconque des revendications 1 à 6, dans laquelle le corps comprend un trou traversant s'étendant depuis la seconde extrémité (20') jusqu'à la tête de corps, et dans laquelle la fixation aveugle (10') est un rivet aveugle à extrémité ouverte.

9. Fixation aveugle (10') selon la revendication 8, dans laquelle l'arbre (32') comprend des évidements et des saillies (70, 72) adaptés pour retenir la tige à l'intérieur du corps avant mise en place, dans lequel les évidements et saillies sont prévus entre la partie affaiblie et la queue de tige.

10. Fixation aveugle (10, 10') selon l'une quelconque des revendications 1 à 9, dans laquelle des renflements de matériau (50, 50') sont prévus entre la partie affaiblie et la tête.

11. Fixation aveugle (10, 10') selon l'une quelconque des revendications 1 à 10, dans laquelle sont prévus deux renflements de matériau diamétralement opposés (50, 50') s'étendant depuis la face inférieure de la tête ou à proximité immédiate de la face inférieure de la tête, dans laquelle un renflement de matériau s'étend entre deux dépressions (42, 42').

12. Procédé de mise en place d'une fixation aveugle (10, 10') selon l'une quelconque des revendications 1 à 11, comprenant les étapes consistant à :
- munir une pièce (26) d'un trou,
- insérer la fixation aveugle (10, 10') dans le trou avec la tête de corps (22, 22') en appui contre la pièce et la queue de tige dépassant du trou,
- munir un outil de pose d'un nez et passer le nez sur la queue de tige (38, 38') et faire venir le nez en butée contre la tête de corps (22, 22') ;
- déplacer la queue de tige vers l'outil de pose, provoquant ainsi un mouvement axial relatif entre la tige (14, 14') et le corps (12, 12'), de telle sorte que la tête de tige se déplace axialement pour venir en prise avec le corps, le matériau du corps se déforme initialement radialement vers l'extérieur, sous compression axiale ;
le procédé étant **caractérisé par le fait que** le mouvement relatif entre la tige et le manchon est tel que le matériau du corps coopère avec les dépressions (42, 42') afin de former un ajustement serré ou un ajustement de forme entre la tige et le corps lorsque la fixation aveugle (10, 10') est placée dans le trou.

13. Procédé selon la revendication 12, dans lequel la fixation aveugle (10, 10') comprend en outre deux renflements de matériau (50, 50') prévus entre la partie affaiblie et la tête de tige (34, 34'), dans lequel pendant que le mouvement relatif entre la tige et le corps (12, 12') est tel que le matériau du corps coopère avec le renflement de matériau pour former une liaison de type force entre la tige et le corps lorsque la fixation aveugle (10, 10') est placée dans le trou.
